# EUROPEAN PATENT APPLICATION

(11) **EP 4 451 596 A1**
(43) Date of publication of application: **23.10.2024**
(21) Application number: 22906426.6
(22) Date of filing: 09.12.2022
(51) Int. Cl.: H04L 5/00

(54) **RESOURCE CONFLICT PROCESSING METHOD AND APPARATUS AND TERMINAL**

(30) Priority: 15.12.2021 CN 202111539343
(71) Applicant: VIVO MOBILE COMMUNICATION CO., LTD., Dongguan, Guangdong 523863 (CN)
(72) Inventor: WANG, Lihui, Dongguan, Guangdong 523863 (CN); PAN, Xueming, Dongguan, Guangdong 523863 (CN)
(74) Representative: Petraz, Gilberto Luigi
(86) International application number: PCT/CN2022/137967
(87) International publication number: WO 2023/109678

(57) **Abstract**

This application discloses a resource conflict processing method and apparatus, and a terminal. The method of this application includes: performing a first operation in a case that a first resource for uplink transmission conflicts with a second resource for downlink reception, where that the first resource conflicts with the second resource includes that: a time interval between the first resource and the second resource is less than uplink and downlink switching time; and the first operation includes at least one of the following: determining an overlapping resource of the first resource and the second resource as an invalid resource of the first resource and/or the second resource; determining a symbol corresponding to the uplink and downlink switching time in the first resource as an invalid resource; determining a symbol corresponding to the uplink and downlink switching time in the second resource as an invalid resource; determining the uplink transmission and the downlink reception as incorrect network configuration or scheduling; skipping the uplink transmission; and determining a target time unit in which the uplink transmission occurs as an unavailable time unit, and determining a quantity of available time units based on the target time unit.

## Description

### CROSS-REFERENCE TO RELATED APPLICATION

This application claims priority to Chinese Patent Application No. 202111539343.1 filed on December 15, 2021, which is incorporated herein by reference in its entirety.

### TECHNICAL FIELD

This application belongs to the field of communication technologies, and specifically, relates to a resource conflict processing method and apparatus, and a terminal.

### BACKGROUND

In a frequency division duplexing (Frequency Division Duplexing, FDD) system, two different carrier frequencies are used for downlink reception and uplink transmission. If a device supports a full duplex (Full Duplex-FDD) operation, the device can perform the downlink reception and the uplink transmission simultaneously. If the device only supports half duplex (Half Duplex-FDD) or does not have a full duplex capability, the device cannot perform the downlink reception and the uplink transmission at a same moment. At a same moment, the device can only perform the downlink reception or the uplink transmission, that is, the device needs to switch between the reception and the transmission. However, when a time interval between a resource for uplink transmission and a resource for downlink reception cannot satisfy uplink and downlink switching time, there is no clear solution for how a terminal performs this process.

### SUMMARY

Embodiments of this application provide a resource conflict processing method and apparatus, and a terminal. This can solve a problem of how the terminal performs this process in a case that a time interval between a resource for uplink transmission and a resource for downlink reception cannot satisfy uplink and downlink switching time.

According to a first aspect, a resource conflict processing method is provided, including:
performing, by a terminal, a first operation in a case that a first resource for uplink transmission conflicts with a second resource for downlink reception, where
that the first resource conflicts with the second resource includes that:
   a time interval between the first resource and the second resource is less than uplink and downlink switching time, where the uplink and downlink switching time includes switching time for the terminal to switch from the downlink reception to the uplink transmission, and/or switching time for the terminal to switch from the uplink transmission to the downlink reception; and
   the first operation includes at least one of the following:
      determining an overlapping resource of the first resource and the second resource as an invalid resource of the first resource and/or the second resource;
      determining a symbol corresponding to the uplink and downlink switching time in a target resource as an invalid resource, where the target resource includes at least one of the first resource and the second resource;
      determining the uplink transmission and the downlink reception as incorrect network configuration or scheduling;
      skipping performing the uplink transmission; and
      determining a target time unit in which the uplink transmission occurs as an unavailable time unit, and determining a quantity of available time units based on the target time unit.

According to a second aspect, a resource conflict processing apparatus is provided, including:
a processing module, configured to perform a first operation in a case that a first resource for uplink transmission conflicts with a second resource for downlink reception, where
that the first resource conflicts with the second resource includes that:
   a time interval between the first resource and the second resource is less than uplink and downlink switching time, where the uplink and downlink switching time includes switching time for the terminal to switch from the downlink reception to the uplink transmission, and/or switching time for the terminal to switch from the uplink transmission to the downlink reception; and
   the first operation includes at least one of the following:
      determining an overlapping resource of the first resource and the second resource as an invalid resource of the first resource and/or the second resource;
      determining a symbol corresponding to the uplink and downlink switching time in a target resource as an invalid resource, where the target resource includes at least one of the first resource and the second resource;
      determining the uplink transmission and the downlink reception as incorrect network configuration or scheduling;
      skipping the uplink transmission; and
      determining a target time unit in which the uplink transmission occurs as an unavailable time unit, and determining a quantity of available time units based on the target time unit.

According to a third aspect, a terminal is provided, where the terminal includes a processor and a memory. The memory stores a program or instructions executable on the processor. When the program or the instructions are executed by the processor, steps of the method according to the first aspect are implemented.

According to a fourth aspect, a terminal is provided, including a processor and a communication interface, where the processor is configured to perform a first operation in a case that a first resource for uplink transmission conflicts with a second resource for downlink reception, where
that the first resource conflicts with the second resource includes that:
a time interval between the first resource and the second resource is less than uplink and downlink switching time, where the uplink and downlink switching time includes switching time for the terminal to switch from the downlink reception to the uplink transmission, and/or switching time for the terminal to switch from the uplink transmission to the downlink reception; and
the first operation includes at least one of the following:
   determining an overlapping resource of the first resource and the second resource as an invalid resource of the first resource and/or the second resource;
   determining a symbol corresponding to the uplink and downlink switching time in a target resource as an invalid resource, where the target resource includes at least one of the first resource and the second resource;
   determining the uplink transmission and the downlink reception as incorrect network configuration or scheduling;
   skipping the uplink transmission; and
   determining a target time unit in which the uplink transmission occurs as an unavailable time unit, and determining a quantity of available time units based on the target time unit.

According to a fifth aspect, a readable storage medium is provided, where the readable storage medium stores a program or instructions, and when the program or the instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program/program product is provided, where the computer program/program product is stored in a storage medium, and the computer program/program product is executed by at least one processor to implement the steps of the method according to the first aspect.

According to an eighth aspect, a communication device is provided, configured to perform the steps of the method according to the first aspect.

In embodiments of this application, in a case that the time interval between the first resource for the uplink transmission and the second resource for the downlink reception is less than the uplink and downlink switching time, the terminal performs the first operation. For example, the overlapping resource of the first resource and the second resource is determined as an invalid resource of the first resource and/or the second resource. The symbol corresponding to the uplink and downlink switching time in the target resource is determined as an invalid resource, where the target resource includes at least one of the first resource and the second resource. The uplink transmission and the downlink reception are determined as incorrect network configuration or scheduling. The uplink transmission is skipped. In this way, in a case that the time interval between the first resource for the uplink transmission and the second resource for the downlink reception cannot satisfy the uplink and downlink switching time, a half-duplex terminal can determine a corresponding process and ensure normal communication of a communication system.

### BRIEF DESCRIPTION OF THE DRAWINGS

FIG. 1 is a diagram of a structure of a communication system to which an embodiment of this application is applicable;
FIG. 2 is a schematic flowchart of a resource conflict processing method according to an embodiment of this application;
FIG. 3 is a first schematic diagram of a relationship between uplink transmission and downlink reception according to an embodiment of this application;
FIG. 4 is a second schematic diagram of a relationship between uplink transmission and downlink reception according to an embodiment of this application;
FIG. 5 is a third schematic diagram of a relationship between uplink transmission and downlink reception according to an embodiment of this application;
FIG. 6 is a fourth schematic diagram of a relationship between uplink transmission and downlink reception according to an embodiment of this application;
FIG. 7 is a fifth schematic diagram of a relationship between uplink transmission and downlink reception according to an embodiment of this application;
FIG. 8 is a schematic diagram of a module of a resource conflict processing apparatus according to an embodiment of this application;
FIG. 9 is a block diagram of a structure of a communication device according to an embodiment of this application; and
FIG. 10 is a block diagram of a structure of a terminal according to an embodiment of this application.

### DETAILED DESCRIPTION

The following clearly describes the technical solutions in embodiments of this application with reference to the accompanying drawings in embodiments of this application. It is clear that, the described embodiments are some of embodiments of this application rather than all of the embodiments. All other embodiments obtained by a person of ordinary skill in the art based on embodiments of this application shall fall within the protection scope of this application.

The terms "first", "second", and the like in the specification and claims of this application are used to distinguish between similar objects, but are not used to describe a specific sequence or order. It may be understood that the terms used in such a way are interchangeable in proper circumstances, so that the embodiments of this application can be implemented in sequences other than the sequence illustrated or described herein. Objects distinguished by using "first" and "second" are generally of one class, and a quantity of the objects are not limited. For example, there may be one or more first objects. In addition, "and/or" in the specification and the claims represents at least one of connected objects, and the character "/" generally represents an "or" relationship between associated objects.

It is worth noting that, the technologies described in embodiments of this application are not limited to a long term evolution (Long Term Evolution, LTE)/LTE-advanced (LTE-Advanced, LTE-A) system, and may be further applied to other wireless communication systems, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and other systems. The terms "system" and "network" in embodiments of this application may usually be used interchangeably. The technology described in embodiments of this application can be applied to the systems and radio technologies mentioned above, and can also be applied to other systems and radio technologies. The following describes a new radio (New Radio, NR) system for example, and NR terms are used in most of the following descriptions. However, these technologies may alternatively be applied to an application in a system other than the NR system, for example, a 6th generation (6th Generation, 6G) system.

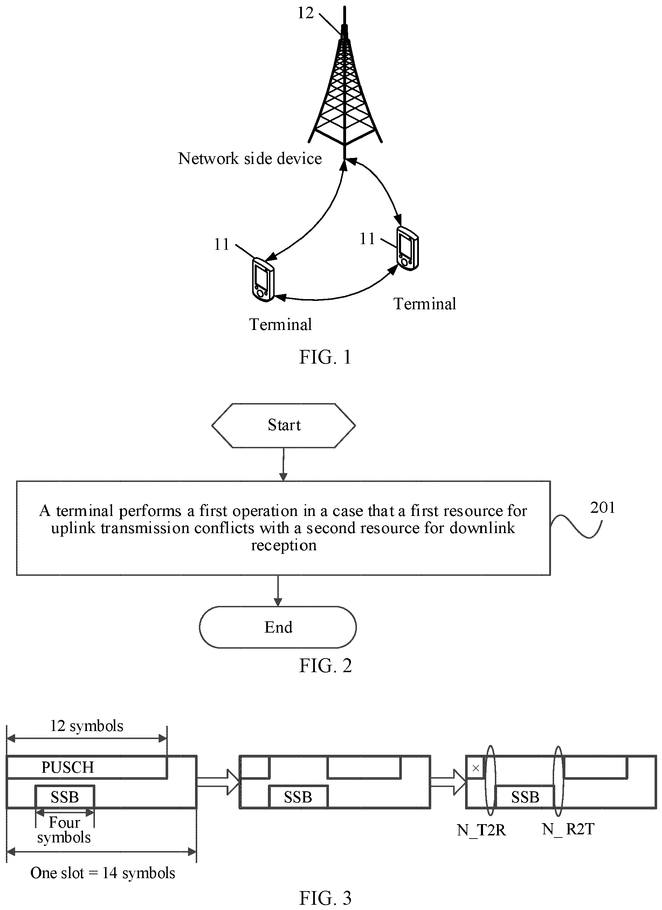

FIG. 1 is a block diagram of a wireless communication system to which an embodiment of this application is applicable. The wireless communication system includes a terminal 11 and a network side device 12. The terminal 11 may be a mobile phone, a tablet computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR) device/a virtual reality (virtual reality, VR) device, a robot, a wearable device (Wearable Device), a vehicle user equipment (Vehicle User Equipment, VUE), a pedestrian terminal (Pedestrian User Equipment, PUE), a smart home (a home appliance having a wireless communication function, for example, a refrigerator, a television, a washing machine, or furniture), a game console, a personal computer (personal computer, PC), a terminal side device such as a teller machines or a self-service machine. The wearable device includes a smart watch, a smart bracelet, a smart headphone, smart glasses, smart jewelry (a smart ring, a smart necklace, and a smart anklet), a smart wristband, smart clothes, and the like. It should be noted that the specific type of the terminal 11 is not limited the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a WiFi node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (transmission reception Point, TRP), or other proper terms in the field. The base station is not limited to a specific technical term, provided that the same technical effect is achieved. It should be noted that, in embodiments of this application, only the base station in the NR system is taken as an example for introduction, and a specific type of the base station is not limited.

With reference to the accompanying drawings, the following provides detailed descriptions of a resource conflict processing method provided in embodiments of this application by using some embodiments and application scenarios.

As shown in FIG. 2, embodiments of this application provide a resource conflict processing method, including:
Step 201: A terminal performs a first operation in a case that a first resource for uplink transmission conflicts with a second resource for downlink reception.

Optionally, a terminal in embodiments of this application may be a reduced capability terminal (Reduced Capability, RedCap device/UE), or a half-duplex terminal. The reduced capability terminal only supports half duplex or does not have a full duplex capability, and cannot perform the downlink reception and the uplink transmission at a same moment.

That the first resource conflicts with the second resource includes that:
a time interval between the first resource and the second resource is less than uplink and downlink switching time, where the uplink and downlink switching time includes switching time for the terminal to switch from the downlink reception to the uplink transmission (where the switching time is second switching time), and/or switching time for the terminal to switch from the uplink transmission to the downlink reception (where the switching time is first switching time).

That the time interval between the first resource and the second resource is less than the uplink and downlink switching time includes two scenarios. One scenario is that the first resource and the second resource overlap, and another scenario is that the first resource and the second resource do not overlap. For example, a quantity of symbols corresponding to the first switching time is N_T2R, and a quantity of symbols corresponding to the second switching time is N_R2T. In a case that the first resource and the second resource do not overlap and a quantity of symbols between the last symbol of the first resource and the first symbol of the second resource is less than N_T2R, or the first resource and the second resource do not overlap and a quantity of symbols between the last symbol of the second resource and the first symbol of the first resource is less than N_R2T, it is determined that the time interval between the first resource and the second resource is less than the uplink and downlink switching time.

Resource overlapping in embodiments of this application includes at least one of the following:
time domain resource overlapping;
frequency domain resource overlapping; and
air domain or code domain resource overlapping.

For example, the uplink transmission is physical uplink shared channel (Physical Uplink Shared Channel, PUSCH) repetition Type B transmission, the downlink reception is reception of a synchronization signal/physical broadcast channel signal block (Synchronization Signal and PBCH block, SSB). The uplink transmission and the downlink reception have overlapping resources. In this situation, a symbol of the SSB divides nominal PUSCH repetition transmission into a plurality of times of actual repetition transmission. In a case that the nominal PUSCH repetition transmission is divided into actual repetition transmission 1 and actual repetition transmission 2, a time interval between the actual repetition transmission 1 and SSB reception is less than the first switching time, and a time interval between the SSB and the actual repetition transmission 2 is less than the second switching time. In this case, the first operation is performed. The first switching time may specifically be switching time for the terminal to switch from the uplink transmission to the downlink reception, and the second switching time may specifically be switching time for the terminal to switch from the downlink reception to the uplink transmission.

The nominal PUSCH repetition transmission may be understood as network configured or scheduled PUSCH repetition transmission.

The first operation includes at least one of the following:
determining an overlapping resource of the first resource and the second resource as an invalid resource of the first resource and/or the second resource;
determining a symbol corresponding to the uplink and downlink switching time in a target resource as an invalid resource, where the target resource includes at least one of the first resource and the second resource;
determining the uplink transmission and the downlink reception as incorrect network configuration or scheduling, where to be specific, in a case that the terminal does not expect to perform the uplink transmission, the network configured and/or scheduled downlink reception and uplink transmission have overlapping resources, or a time interval between the network configured and/or scheduled downlink reception and uplink transmission is less than the uplink and downlink switching time; or in a case that the terminal does not expect to perform the downlink reception, the network configured and/or scheduled uplink transmission and downlink reception have overlapping resources, or a time interval between the network configured and/or scheduled uplink transmission and downlink reception is less than the uplink and downlink switching time;
skipping the uplink transmission, and optionally, further skipping the downlink reception; and
determining a target time unit in which the uplink transmission occurs as an unavailable (not available) time unit, and determining a quantity of available time units based on the target time unit.

The invalid resource in embodiments of this application may be understood as an unavailable resource. To be specific, for the terminal, by using the uplink transmission as an example, in a case that the uplink transmission is repetition Type A repetition transmission, the resource cannot be used for the uplink transmission; and in a case that the uplink transmission is repetition Type B repetition transmission, one nominal repetition transmission may be divided into a plurality of times of actual repetition transmission by the invalid resource.

In a specific embodiment of this application, when the quantity of available time units is determined based on the target time unit, the target time unit is included in the quantity of available time units. In this way, a half duplex user and a full duplex user perform unified processing. This is simple to operate and reduces complexity of network side blind detection. Alternatively, the target time unit is not included in the quantity of available time units. This ensures accuracy of a total quantity of time units used for actual transmission, and improves performance of the uplink transmission of a half-duplex terminal.

Optionally, the time unit includes at least one slot, or includes at least one sub-slot, or includes a time domain resource occupied by at least one transmission (nominal transmission or actual repetition transmission). In embodiments of this application, in a case that the first resource for the uplink transmission conflicts with the second resource for the downlink reception, the overlapping resource of the first resource and the second resource is determined as an invalid resource, or the symbol corresponding to the uplink and downlink switching time in the target resource is determined as an invalid resource. This can reduce limitations on network side resource scheduling or configuration. The uplink transmission is skipped to perform the downlink reception preferentially. This ensures reliability of the downlink reception. The target time unit in which the uplink transmission occurs is determined as an unavailable time unit, to postpone the uplink transmission to a next available time unit, improving transmission reliability and uplink coverage. The uplink transmission and the downlink reception are determined as incorrect network configuration or scheduling, and the first resource and the second resource are used to ensure that the network configuration does not conflict, to further improve the transmission reliability.

According to the method in embodiments of this application, in a case that the time interval between the first resource for the uplink transmission and the second resource for the downlink reception is less than the uplink and downlink switching time, the terminal performs the first operation. For example, the overlapping resource of the first resource and the second resource is determined as an invalid resource of the first resource and/or the second resource. The symbol corresponding to the uplink and downlink switching time in the target resource is determined as an invalid resource, where the target resource includes at least one of the first resource and the second resource. The uplink transmission and the downlink reception are determined as incorrect network configuration or scheduling. The uplink transmission is skipped. In this way, in a case that the time interval between the first resource for the uplink transmission and the second resource for the downlink reception cannot satisfy the uplink and downlink switching time, the half-duplex terminal can determine a corresponding process and ensure normal communication of a communication system.

Optionally, before that the symbol corresponding to the uplink and downlink switching time in the target resource is determined as an invalid resource, the method further includes at least one of the following:
determining the target resource based on priorities of the first resource and the second resource, for example, the resource with lower priority is determined as the target resource;
determining the target resource based on starting positions of the first resource and the second resource, where the starting position includes at least one of a starting position of the time domain resource and a starting position of a frequency domain resource;
determining the target resource based on network configuration or a network indication; and
determining the target resource based on implementation of the terminal, that is, the terminal determines the target resource.

For example, in a case that the priority of the first resource is greater than the priority of the second resource, the second resource is determined as the target resource. For another example, a resource having a later starting position or an earlier starting position in the first resource and the second resource is determined as the target resource.

In addition, a network side in embodiments of this application may be an FDD system, a time division duplexing (Duplex) (Time Division Duplexing (Duplex), TDD) system, or a flexible/full-duplex-FDD system.

Optionally, the uplink transmission includes at least one of the following:
physical uplink shared channel PUSCH repetition Type B transmission (PUSCH repetition Type B transmission): The PUSCH repetition Type B transmission may be nominal PUSCH repetition transmission, or may be actual PUSCH transmission after a nominal PUSCH is divided by an invalid symbol;
PUSCH repetition Type A transmission (PUSCH repetition Type A transmission);
at least one of initial transmission and retransmission of a message 3 (Msg3): The initial transmission of the Msg3 may be scheduled by random access response (Rach access response, RAR) uplink grant (UL grant), and the retransmission of the Msg3 may be scheduled by a temporary cell radio network temporary identifier (Temporary Cell Radio Network Temporary Identifiers, TC-RNTI) scrambling downlink control information format (Downlink Control Information format, DCI format) 0_0;
PUSCH transmission of a message MsgA, where the MsgA may specifically be a MsgA in two-step random access;
transport block (Transport Block, TB) transmission over a multi-slot physical uplink shared channel (multi-slot PUSCH): Specifically, the TB transmission is a TB processing over the multi-slot PUSCH introduced by the Rel-17 protocol;
physical uplink control channel (Physical Uplink Control Channel, PUCCH) transmission; and
sounding reference signal (Sounding Reference Signal, SRS) transmission.

Optionally, the downlink reception includes at least one of the following:
reception of a target synchronization signal/physical broadcast channel signal block SSB; and
reception of a target control resource set.

Optionally, the target SSB is an SSB indicated by an SSB position in a system message (System Information Block1, SIB1) or an SSB position in *ServingCellConfigCommon* signaling.

Optionally, the target control resource set is a control resource set for PDCCH common search space of type 0 and configured by physical downlink control channel configuration PDCCH-ConfigSIB 1 in a main information block.

Optionally, before the terminal performs the first operation, the method further includes:
determining the first operation based on a type of the uplink transmission.

Optionally, the type of the uplink transmission includes at least one of the following:
semi-static uplink transmission granted or configured through high layer signaling, for example, PUCCH or SRS transmission configured through the higher layer signaling;
uplink transmission scheduled by downlink control information DCI, or dynamically scheduled uplink transmission;
the PUSCH transmission of the message MsgA; and
PUSCH transmission of the message Msg3.

(1) In a case that the type of the uplink transmission is a granted PUSCH, the first operation includes at least one of the following:
   determining the overlapping resource of the first resource and the second resource as an invalid resource of the first resource and/or the second resource;
   determining a symbol corresponding to the uplink and downlink switching time in the first resource as an invalid resource;
   determining a symbol corresponding to the uplink and downlink switching time in the second resource as an invalid resource;
   skipping the uplink transmission; and
   determining the target time unit in which the uplink transmission occurs as an unavailable time unit, and determining the quantity of available time units based on the target time unit.
(2) In a case that the type of the uplink transmission is the SRS scheduled by the DCI or the dynamically scheduled PUSCH, the first operation includes at least one of the following:
   determining the overlapping resource of the first resource and the second resource as an invalid resource of the first resource and/or the second resource;
   determining the symbol corresponding to the uplink and downlink switching time in the first resource as an invalid resource;
   determining the symbol corresponding to the uplink and downlink switching time in the second resource as an invalid resource;
   determining the uplink transmission and the downlink reception as incorrect network configuration or scheduling;
   skipping the uplink transmission; and
   determining the target time unit in which the uplink transmission occurs as an unavailable time unit, and determining the quantity of available time units based on the target time unit.
(3) In a case that the type of the uplink transmission is a PUCCH scheduled by the DCI, the first operation includes at least one of the following:
   determining the uplink transmission and the downlink reception as incorrect network configuration or scheduling;
   skipping the uplink transmission; and
   determining the target time unit in which the uplink transmission occurs as an unavailable time unit, and determining the quantity of available time units based on the target time unit.
(4) In a case that the type of the uplink transmission is a high layer signaling configured semi-static PUCCH, the first operation includes at least one of the following:
   skipping the uplink transmission; and
   determining the target time unit in which the uplink transmission occurs as an unavailable time unit, and determining the quantity of available time units based on the target time unit.
(5) In a case that the type of the uplink transmission is a high layer signaling configured semi-static SRS, the first operation includes at least one of the following:
   determining the overlapping resource of the first resource and the second resource as an invalid resource of the first resource and/or the second resource;
   determining the symbol corresponding to the uplink and downlink switching time in the first resource as an invalid resource;
   determining the symbol corresponding to the uplink and downlink switching time in the second resource as an invalid resource;
   skipping the uplink transmission; and
   determining the target time unit in which the uplink transmission occurs as an unavailable time unit, and determining the quantity of available time units based on the target time unit.
(6) In a case that the type of the uplink transmission is PUSCH transmission of the message MsgA or PUSCH transmission of a message 3, the first operation includes at least one of the following:
   skipping the uplink transmission; and
   determining the target time unit in which the uplink transmission occurs as an unavailable time unit; and including the target time unit in the quantity of available time units.

With reference to specific application scenarios, the following provides descriptions of the method of this application.

In an application scenario in embodiments of this application, as shown in FIG. 3, the uplink transmission is the PUSCH repetition Type B transmission, and the downlink reception is the SSB reception. The PUSCH overlaps with the SSB. The PUSCH occupies 12 orthogonal frequency division multiplexing (Orthogonal Frequency Division Multiplexing, OFDM) symbols and the SSB occupies 4 OFDM symbols. Among the symbols occupied by the PUSCH, four symbols overlapping with the SSB are determined as an invalid symbol. The invalid symbol divides the PUSCH repetition transmission into two actual PUSCH repetition transmission, such as PUSCH actual repetition transmission 1 (occupying two symbols) and PUSCH actual repetition transmission 2 (occupying six symbols). Then, the last N_T2R symbols (such as one symbol) in the PUSCH actual repetition transmission 1 are determined as an invalid symbol (that is, the symbol corresponding to the first switching time is determined as an invalid symbol), and the first N_R2T symbols (such as one symbol) in the PUSCH actual repetition transmission 2 is determined as an invalid symbol (that is, the symbol corresponding to the second switching time is determined as an invalid symbol), to obtain divided PUSCH actual repetition transmission 1 (occupying one symbol) and divided PUSCH actual repetition transmission 2 (occupying five symbols). In this way, the PUSCH actual repetition transmission 1 is skipped according to the protocol, and the divided PUSCH actual repetition transmission 2 is transmitted.

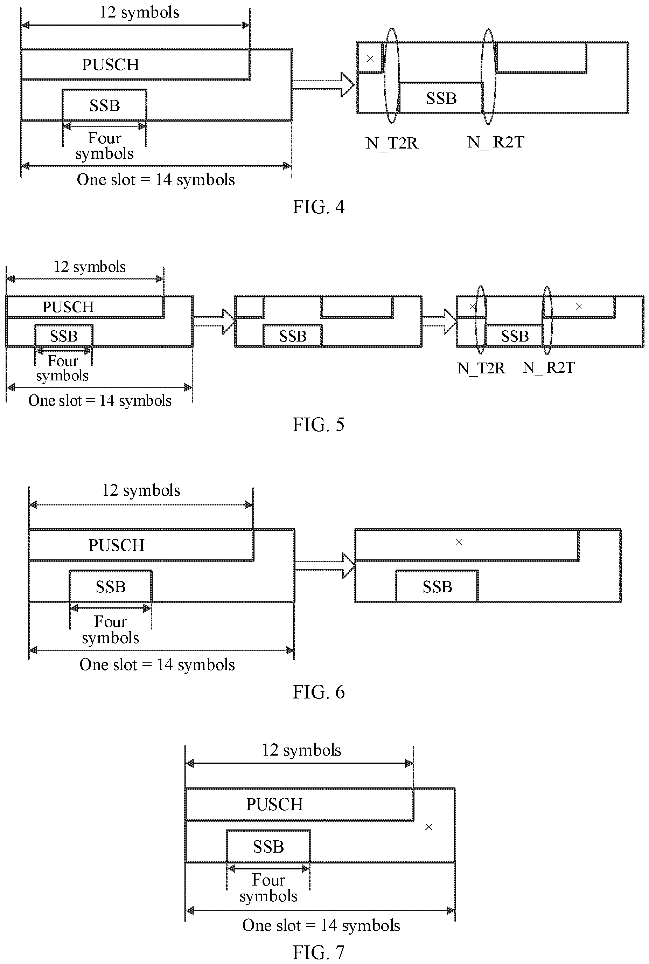

Alternatively, as shown in FIG. 4, the PUSCH repetition transmission is divided based on the symbol occupied by the first switching time, the symbol occupied by the second switching time, and the symbol occupied by the SSB, to obtain the divided PUSCH actual repetition transmission 1 (occupying one symbol) and the divided PUSCH actual repetition transmission 2 (occupying five symbols). In this way, the PUSCH actual repetition transmission 1 is skipped according to the protocol, and the divided PUSCH actual repetition transmission 2 is transmitted.

In this application scenario, the PUSCH repetition Type B transmission may be the granted PUSCH, or may be the dynamically scheduled PUSCH.

In another application scenario in embodiments of this application, as shown in FIG. 5, the uplink transmission is the PUSCH repetition Type B transmission, and the downlink reception is the SSB reception. The PUSCH overlaps with the SSB. The PUSCH occupies 12 OFDM symbols and the SSB occupies four OFDM symbols. First, division is performed based on the resource overlapping. Among the symbols occupied by the PUSCH, the four symbols overlapping with the SSB are determined as an invalid symbol. One nominal repetition transmission is divided into two actual repetition transmission. A time interval between the two actual repetition transmission and the SSB cannot satisfy the uplink and downlink switching time. Therefore, the two repetition transmission are skipped. Alternatively, as shown in FIG. 6, in a case that the PUSCH repetition transmission overlaps with the SSB, the PUSCH repetition transmission is directly skipped.

In this application scenario, the PUSCH repetition Type B transmission may be the granted PUSCH, or may be the dynamically scheduled PUSCH.

In another application scenario in embodiments of this application, as shown in FIG. 7, the uplink transmission is the PUSCH repetition Type B transmission, and the downlink reception is the SSB reception. In a case that the PUSCH overlaps with the SSB, the terminal is determined as incorrect configuration or scheduling, that is, the terminal does not expect that the uplink transmission overlaps with the downlink reception.

In another application scenario in embodiments of this application, in a case that available slot counting (Available Slot Counting) is used, for PUSCH repetition Type A transmission scheduled by a DCI format 0_1 or 0_2, or for PUSCH transmission processed by the TB and scheduled by the DCI format 0_1 or 0_2 in a plurality of slots, in a case that an interval between a last symbol of the PUSCH transmission indicated by an index row of a resource allocation table used in the slot and a first symbol of a synchronization signal/physical broadcast channel (Synchronization Signal/Physical Broadcast Channel, SS/PBCH) block of an index provided by a synchronization signal/physical broadcast channel position (ssb-PositionInBurst) is less than a length of the N_T2R symbols, or an interval between a first symbol of the PUSCH transmission and a last symbol of the SS/PBCH block of the index provided by the ssb-PositionInBurst is less than the length of N_R2T symbols. A slot in which the PUSCH is located is not included in the count of consecutive available slots.

In a case that the available slot counting is used, and for PUSCH repetition Type A transmission granted and scheduled by RAR UL, in a case that at least one symbol of the symbol indicated by the index row of the resource allocation table used in at least one slot overlaps with a symbol of the SS/PBCH block of the index provided by the ssb-PositionInBurst, or the interval between the last symbol of the PUSCH transmission and the first symbol of the SS/PBCH block of the index provided by the ssb-PositionInBurst is less than the length of N_T2R symbols, or the interval between the interval between a first symbol of the PUSCH transmission and a last symbol of the SS/PBCH block of the index provided by the ssb-PositionInBurst is less than the length of N_R2T symbols. The slot in which the PUSCH is located is included in the count of consecutive available slots, but the terminal skips the PUSCH transmission of the slot.

In a case that the available slot counting is used, for PUSCH repetition Type A transmission scheduled by the TC-RNTI scrambling DCI format 0_0, in a case that at least one symbol of the symbol indicated by the index row of the resource allocation table used in at least one slot overlaps with a symbol of the SS/PBCH block of the index provided by the ssb-PositionInBurst, or the interval between the last symbol of the PUSCH transmission and the first symbol of the SS/PBCH block of the index provided by the ssb-PositionInBurst is less than the length of N_T2R symbols, or the interval between the interval between a first symbol of the PUSCH transmission and a last symbol of the SS/PBCH block of the index provided by the ssb-PositionInBurst is less than the length of N_R2T symbols. The slot in which the PUSCH is located is included in the count of consecutive available slots, but the terminal skips the PUSCH transmission of the slot.

According to the method in embodiments of this application, in a case that the time interval between the first resource for the uplink transmission and the second resource for the downlink reception is less than the uplink and downlink switching time, the terminal performs the first operation. For example, the overlapping resource of the first resource and the second resource is determined as an invalid resource of the first resource and/or the second resource. The symbol corresponding to the uplink and downlink switching time in a target resource is determined as an invalid resource, where the target resource includes at least one of the first resource and the second resource. The uplink transmission and the downlink reception are determined as incorrect network configuration or scheduling. The uplink transmission is skipped. In this way, in a case that the time interval between the first resource for the uplink transmission and the second resource for the downlink reception cannot satisfy the uplink and downlink switching time, the half-duplex terminal can determine a corresponding process and ensure normal communication of a communication system.

Embodiments of this application provide a resource conflict processing method, and an execution entity may be a resource conflict processing apparatus. In embodiments of this application, that the resource conflict processing apparatus performs the resource conflict processing method is used as an example to explain the resource conflict processing apparatus provided by embodiments of this application.

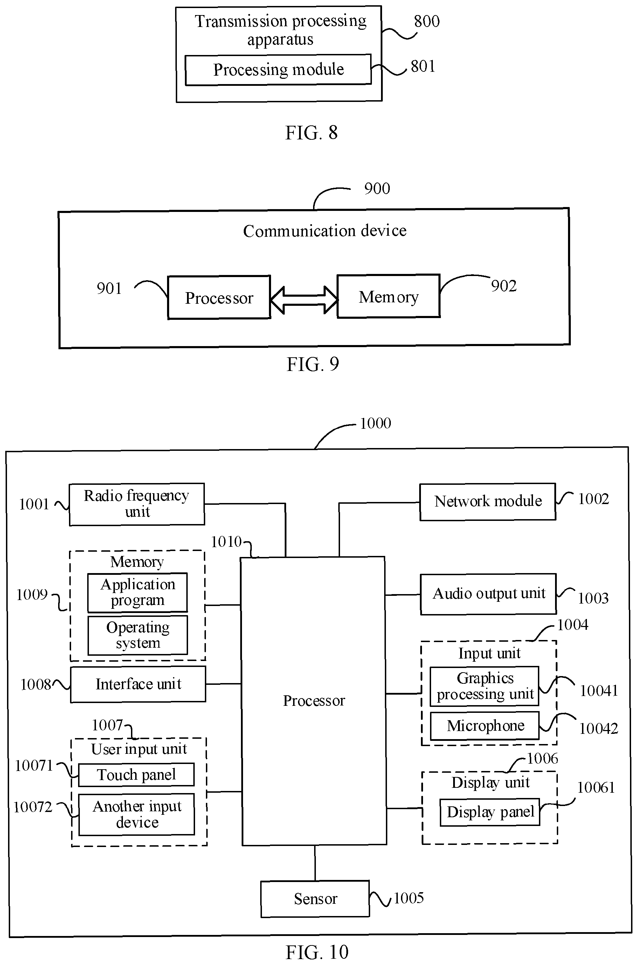

As shown in FIG. 8, embodiments of this application provide a resource conflict processing apparatus 800, including:
a processing module 801, configured to perform a first operation in a case that a first resource for uplink transmission conflicts with a second resource for downlink reception, where
that the first resource conflicts with the second resource includes that:
   a time interval between the first resource and the second resource is less than uplink and downlink switching time, where the uplink and downlink switching time includes switching time for the terminal to switch from the downlink reception to the uplink transmission, and/or switching time for the terminal to switch from the uplink transmission to the downlink reception; and
   the first operation includes at least one of the following:
      determining an overlapping resource of the first resource and the second resource as an invalid resource of the first resource and/or the second resource;
      determining a symbol corresponding to the uplink and downlink switching time in a target resource as an invalid resource, where the target resource includes at least one of the first resource and the second resource;
      determining the uplink transmission and the downlink reception as incorrect network configuration or scheduling;
      skipping the uplink transmission; and
      determining a target time unit in which the uplink transmission occurs as an unavailable time unit, and determining a quantity of available time units based on the target time unit.

Optionally, the apparatus in embodiments of this application further includes:
a first determining module, configured to perform, before the processing module determines the symbol corresponding to the uplink and downlink switching time in the target resource as an invalid resource, at least one of the following:
determine the target resource based on priorities of the first resource and the second resource;
determine the target resource based on starting positions of the first resource and the second resource;
determine the target resource based on network configuration or a network indication; and
determine the target resource based on implementation of the terminal.

Optionally, the uplink transmission includes at least one of the following:
physical uplink shared channel PUSCH repetition Type B transmission;
PUSCH repetition Type A transmission;
at least one of initial transmission and retransmission of a message Msg3;
PUSCH transmission of a message MsgA;
transport block transmission over a multi-slot physical uplink shared channel multi-slot PUSCH;
physical uplink control channel PUCCH transmission; and
sounding reference signal SRS transmission.

Optionally, the downlink reception includes at least one of the following:
reception of a target synchronization signal/physical broadcast channel signal block SSB; and
reception of a target control resource set.

Optionally, the target SSB is an SSB indicated by an SSB position in a system message SIB1 or an SSB position in *ServingCellConfigCommon* signaling.

Optionally, the target control resource set is a control resource set for PDCCH common search space of type 0 and configured by physical downlink control channel configuration PDCCH-ConfigSIB 1 in a main information block.

Optionally, the apparatus in embodiments of this application further includes:
a second determining module, configured to perform the first operation before the processing module determines the first operation based on a type of the uplink transmission.

Optionally, the type of the uplink transmission includes at least one of the following:
semi-static uplink transmission granted or configured through high layer signaling;
uplink transmission scheduled by downlink control information DCI; the PUSCH transmission of the message MsgA; and
PUSCH transmission of a message 3.

According to the apparatus in embodiments of this application, in a case that the time interval between the first resource for the uplink transmission and the second resource for the downlink reception is less than the uplink and downlink switching time, the terminal performs the first operation. For example, the overlapping resource of the first resource and the second resource is determined as an invalid resource of the first resource and/or the second resource. The symbol corresponding to the uplink and downlink switching time in the target resource is determined as an invalid resource, where the target resource includes at least one of the first resource and the second resource. The uplink transmission and the downlink reception are determined as incorrect network configuration or scheduling. The uplink transmission is skipped. In this way, in a case that the time interval between the first resource for the uplink transmission and the second resource for the downlink reception cannot satisfy the uplink and downlink switching time, a half-duplex terminal can determine a corresponding process and ensure normal communication of a communication system.

The resource conflict processing apparatus in embodiments of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). Embodiments of this application are not specifically limited.

The resource conflict processing apparatus provided by embodiments of this application can realize each process realized by the method embodiments of FIG. 2 to FIG. 7 and achieve the same technical effect. To avoid repetition, this is not described herein again.

As shown in FIG. 9, embodiments of this application further provide a communication 900, including a processor 901 and a memory 902. The memory 902 stores a program or instructions run on the processor 901. For example, when the communication 900 is a terminal, each step of method embodiments for implementing the resource conflict processing method when the program or the instructions are executed by the processor 901, and a same technical effect can be achieved. To avoid repetition, this is not described herein again.

Embodiments of this application provide a terminal, including a processor and a communication interface. The processor is configured to perform a first operation in a case that a first resource for uplink transmission conflicts with a second resource for downlink reception, where that the first resource conflicts with the second resource includes that:
a time interval between the first resource and the second resource is less than uplink and downlink switching time, where the uplink and downlink switching time includes switching time for the terminal to switch from the downlink reception to the uplink transmission, and/or switching time for the terminal to switch from the uplink transmission to the downlink reception; and
the first operation includes at least one of the following:
   determining an overlapping resource of the first resource and the second resource as an invalid resource of the first resource and/or the second resource;
   determining a symbol corresponding to the uplink and downlink switching time in a target resource as an invalid resource, where the target resource includes at least one of the first resource and the second resource;
   determining the uplink transmission and the downlink reception as incorrect network configuration or scheduling;
   skipping the uplink transmission; and
   determining a target time unit in which the uplink transmission occurs as an unavailable time unit, and determining a quantity of available time units based on the target time unit. Terminal embodiments corresponds to the foregoing terminal side method embodiments. Each implementation process and implementation in the foregoing method embodiments are applied to terminal embodiments, and a same technical effect can be achieved. Specifically, FIG. 10 is a schematic hardware diagram a structure of a terminal for implementing an embodiment of this application.

A terminal 1000 includes, but is not limited to, at least some parts of components such as a radio frequency unit 1001, a network module 1002, an audio output unit 1003, an input unit 1004, a sensor 1005, a display unit 1006, a user input unit 1007, an interface unit 1008, a memory 1009, a processor 1010.

A person skilled in the art may understand that the terminal 1000 may further include the power supply (such as a battery) for supplying power to components. The power supply may be logically connected to the processor 1010 by a power management system, to implement functions such as charging, discharging, and power consumption management by using the power management system. The terminal structure shown in FIG. 10 does not constitute a limitation on the terminal, and the terminal may include more or fewer components than shown, or combine some components, or have different component arrangements. This is not described herein again.

It should be understood that, the input unit 1004 may include a graphics processing unit (Graphics Processing Unit, GPU) 10041 and a microphone 10042. The graphics processing unit 10041 performs processing on image data of a static picture or a video that is obtained by an image acquisition device (for example, a camera) in a video acquisition mode or an image acquisition mode. The display unit 1006 may include a display panel 10061, and the display panel 10061 may be configured by using a liquid crystal display, an organic light-emitting diode, or the like. The user input unit 1007 includes at least one of a touch panel 10071 and another input device 10072. The touch panel 10071 may also be referred to as a touchscreen. The touch panel 10071 may include two parts: a touch detection apparatus and a touch controller. The another input device 10072 may include, but is not limited to, a physical keyboard, a functional key (such as a volume control key or a switch key), a track ball, a mouse, and a joystick. This is not repeated herein again.

In embodiments of this application, after receiving downlink data from a network side device, a radio frequency unit 1001 may transmit the downlink data to the processor 1010 for processing. In addition, the radio frequency unit 1001 may send uplink data to the network side device. Generally, the radio frequency unit 1001 includes, but is not limited to, an antenna, an amplifier, a transceiver, a coupler, a low noise amplifier, a duplexer, and the like.

The memory 1009 may be configured to store a software program or instructions and various data. The memory 1009 may mainly include a first storage area that stores a program or instructions and a second storage area that stores data. The first storage area may store an operating system, an application program or the instructions required by at least one function (for example, a sound playback function and an image display function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR_ SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1009 in embodiments of this application includes, but is not limited to, the memories and any other memory of a suitable type.

The processor 1010 may include one or more processing units. Optionally, the processor 1010 may integrate an application processor and a modem processor. The application processor mainly processes an operation involving technologies operating system, a user interface, an application program, and the like. The modem processor mainly processes a wireless communication signal, such as a baseband processor. It may be understood that, the modem processor may alternatively not be integrated in the processor 1010.

The processor 1010 is configured to perform a first operation in a case that a first resource for uplink transmission conflicts with a second resource for downlink reception.

That the first resource conflicts with the second resource includes that:
a time interval between the first resource and the second resource is less than uplink and downlink switching time, where the uplink and downlink switching time includes switching time for the terminal to switch from the downlink reception to the uplink transmission, and/or switching time for the terminal to switch from the uplink transmission to the downlink reception; and
the first operation includes at least one of the following:
   determining an overlapping resource of the first resource and the second resource as an invalid resource of the first resource and/or the second resource;
   determining a symbol corresponding to the uplink and downlink switching time in a target resource as an invalid resource, where the target resource includes at least one of the first resource and the second resource;
   determining the uplink transmission and the downlink reception as incorrect network configuration or scheduling;
   skipping the uplink transmission; and
   determining a target time unit in which the uplink transmission occurs as an unavailable time unit, and determining a quantity of available time units based on the target time unit.

In embodiments of this application, in a case that the time interval between the first resource for the uplink transmission and the second resource for the downlink reception is less than the uplink and downlink switching time, the terminal performs the first operation. For example, the overlapping resource of the first resource and the second resource is determined as an invalid resource of the first resource and/or the second resource. The symbol corresponding to the uplink and downlink switching time in a target resource is determined as an invalid resource, where the target resource includes at least one of the first resource and the second resource. The uplink transmission and the downlink reception are determined as incorrect network configuration or scheduling. The uplink transmission is skipped. In this way, in a case that the time interval between the first resource for the uplink transmission and the second resource for the downlink reception cannot satisfy the uplink and downlink switching time, a half-duplex terminal can determine a corresponding process and ensure normal communication of a communication system.

Optionally, before that the symbol corresponding to the uplink and downlink switching time in the target resource is determined as an invalid resource, the method further includes at least one of the following:
determining the target resource based on priorities of the first resource and the second resource;
determining the target resource based on starting positions of the first resource and the second resource;
determining the target resource based on network configuration or a network indication; and
determining the target resource based on implementation of the terminal.

Optionally, the uplink transmission includes at least one of the following:
physical uplink shared channel PUSCH repetition Type B transmission;
PUSCH repetition Type A transmission;
at least one of initial transmission and retransmission of a message Msg3;
PUSCH transmission of a message MsgA;
transport block transmission over a multi-slot physical uplink shared channel multi-slot PUSCH;
physical uplink control channel PUCCH transmission; and
sounding reference signal SRS transmission.

Optionally, the downlink reception includes at least one of the following:
reception of a target synchronization signal/physical broadcast channel signal block SSB; and
reception of a target control resource set.

Optionally, the target SSB is an SSB indicated by an SSB position in a system message SIB1 or an SSB position in *ServingCellConfigCommon* signaling.

Optionally, the target control resource set is a control resource set for PDCCH common search space of type 0 and configured by physical downlink control channel configuration PDCCH-ConfigSIB 1 in a main information block.

Optionally, the processor 1010 is further configured to:
determine the first operation based on a type of the uplink transmission.

Optionally, the type of the uplink transmission includes at least one of the following:
semi-static uplink transmission granted or configured through high layer signaling;
uplink transmission scheduled by downlink control information DCI;
the PUSCH transmission of the message MsgA; and
PUSCH transmission of a message 3.

In embodiments of this application, in a case that the time interval between the first resource for the uplink transmission and the second resource for the downlink reception is less than the uplink and downlink switching time, the terminal performs the first operation. For example, the overlapping resource of the first resource and the second resource is determined as an invalid resource of the first resource and/or the second resource. The symbol corresponding to the uplink and downlink switching time in a target resource is determined as an invalid resource, where the target resource includes at least one of the first resource and the second resource. The uplink transmission and the downlink reception are determined as incorrect network configuration or scheduling. The uplink transmission is skipped. In this way, in a case that the time interval between the first resource for the uplink transmission and the second resource for the downlink reception cannot satisfy the uplink and downlink switching time, the half-duplex terminal can determine a corresponding process and ensure normal communication of a communication system.

Embodiments of this application further provide a readable storage medium, where the readable storage medium may be non-volatile or volatile, and the readable storage medium stores a program or instructions. Each process of the method for implementing the resource conflict processing method when the program or the instructions are executed by a processor, and a same technical effect can be achieved. To avoid repetition, this is not described herein again.

The processor may be a processor of the terminal in foregoing embodiments. The readable storage medium includes a computer-readable storage medium, for example, a computer read-only memory ROM, a random access memory RAM, magnetic disk, or optical disk

Embodiments of this application further provide a chip, where the chip includes a processor and a communication interface. The communication interface is coupled to the processor. The processor is used to run a program or instructions, to implement the resource conflict processing method, and a same technical effect can be achieved. To avoid repetition, this is not described herein again.

It should be understood that, the chip mentioned in embodiments of this application further may be referred to as a system chip, a chip system, a system on chip, or the like.

Embodiments of this application provide a computer program/program product, where the computer program/program product is stored in a non-transitory storage medium. The computer program/program product is executed by at least one processor to implement the resource conflict processing method, and a same technical effect can be achieved. To avoid repetition, this is not described herein again.

It should be noted that the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ...... " does not exclude that there are still other same elements in the processes, methods, objects, or apparatuses. In addition, it should be noted that, a range of the method and the apparatus in embodiments of this application is not limited to perform a function in a sequence shown or discussed, and may further include performing the function based on a related function in a substantially same manner or in a reverse sequence. For example, the function may be performed in the sequence shown or discussed. The described method may be performed in a sequence different from the described method, and various steps may alternatively be added, omitted, or combined. In addition, features described with reference to examples may be combined in other examples.

Through the descriptions of the foregoing implementations, a person skilled in the art may clearly understand that the methods in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the current art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in embodiments of this application.

Embodiments of this application are described above with reference to the accompanying drawings. However, this application is not limited to the foregoing specific implementations. The foregoing specific implementations are illustrative instead of imitative. Enlightened by this application, a person of ordinary skill in the art can make many forms without departing from the idea of this application and the scope of protection of the claims. All of the forms fall within the protection of this application.

## Claims

1. A resource conflict processing method, comprising:
performing, by a terminal, a first operation in a case that a first resource for uplink transmission conflicts with a second resource for downlink reception; wherein
that the first resource conflicts with the second resource comprises that:
a time interval between the first resource and the second resource is less than uplink and downlink switching time, wherein the uplink and downlink switching time comprises switching time for the terminal to switch from the downlink reception to the uplink transmission, and/or switching time for the terminal to switch from the uplink transmission to the downlink reception; and
the first operation comprises at least one of the following:
determining an overlapping resource of the first resource and the second resource as an invalid resource of the first resource and/or the second resource;
determining a symbol corresponding to the uplink and downlink switching time in a target resource as an invalid resource, wherein the target resource comprises at least one of the first resource and the second resource;
determining the uplink transmission and the downlink reception as incorrect network configuration or scheduling;
skipping the uplink transmission; and
determining a target time unit in which the uplink transmission occurs as an unavailable time unit, and determining a quantity of available time units based on the target time unit.

2. The method according to claim 1, wherein before the determining a symbol corresponding to the uplink and downlink switching time in a target resource as an invalid resource, the method further comprises at least one of the following:
determining, by the terminal, the target resource based on priorities of the first resource and the second resource;
determining, by the terminal, the target resource based on starting positions of the first resource and the second resource;
determining, by the terminal, the target resource based on network configuration or a network indication; and
determining, by the terminal, the target resource based on implementation of the terminal.

3. The method according to claim 1 or 2, wherein the uplink transmission comprises at least one of the following:
physical uplink shared channel PUSCH repetition Type B transmission;
PUSCH repetition Type A transmission;
at least one of initial transmission and retransmission of a message Msg3;
PUSCH transmission of a message MsgA;
transport block TB transmission over a multi-slot physical uplink shared channel multi-slot PUSCH;
physical uplink control channel PUCCH transmission; and
sounding reference signal SRS transmission.

4. The method according to any one of claims 1 to 3, wherein the downlink reception comprises at least one of the following:
reception of a target synchronization signal/physical broadcast channel signal block SSB; and
reception of a target control resource set.

5. The method according to claim 4, wherein the target SSB is an SSB indicated by an SSB position.

6. The method according to claim 5, wherein the SSB position comprises an SSB position in a system message SIB1 or an SSB position in *ServingCellConfigCommon* signaling.

7. The method according to claim 4, wherein the target control resource set is a control resource set for PDCCH common search space of type 0 and configured by physical downlink control channel configuration PDCCH-ConfigSIB 1 in a main information block.

8. The method according to any one of claims 1 to 7, wherein before the performing, by a terminal, a first operation, the method further comprises:
determining the first operation based on a type of the uplink transmission.

9. The method according to claim 8, wherein the type of the uplink transmission comprises at least one of the following:
semi-static uplink transmission granted or configured through high layer signaling;
uplink transmission scheduled by downlink control information DCI;
PUSCH transmission of a message MsgA; and
PUSCH transmission of a message 3.

10. A resource conflict processing apparatus, comprising:
a processing module, configured to perform a first operation in a case that a first resource for uplink transmission conflicts with a second resource for downlink reception; wherein
that the first resource conflicts with the second resource comprises that:
a time interval between the first resource and the second resource is less than uplink and downlink switching time, wherein the uplink and downlink switching time comprises switching time for a terminal to switch from the downlink reception to the uplink transmission, and/or switching time for the terminal to switch from the uplink transmission to the downlink reception; and
the first operation comprises at least one of the following:
determining an overlapping resource of the first resource and the second resource as an invalid resource of the first resource and/or the second resource;
determining a symbol corresponding to the uplink and downlink switching time in a target resource as an invalid resource, wherein the target resource comprises at least one of the first resource and the second resource;
determining the uplink transmission and the downlink reception as incorrect network configuration or scheduling;
skipping the uplink transmission; and
determining a target time unit in which the uplink transmission occurs as an unavailable time unit, and determining a quantity of available time units based on the target time unit.

11. The apparatus according to claim 10, wherein the apparatus further comprises:
a first determining module, configured to perform, before the processing module determines a symbol corresponding to the uplink and downlink switching time in a target resource as an invalid resource, at least one of the following:
determining the target resource based on priorities of the first resource and the second resource;
determining the target resource based on starting positions of the first resource and the second resource;
determining the target resource based on network configuration or a network indication; and
determining the target resource based on implementation of the terminal.

12. The apparatus according to claim 10 or 11, wherein the uplink transmission comprises at least one of the following:
physical uplink shared channel PUSCH repetition Type B transmission;
PUSCH repetition Type A transmission;
at least one of initial transmission and retransmission of a message Msg3;
the PUSCH transmission of the message MsgA; and
transport block TB transmission over a multi-slot physical uplink shared channel multi-slot PUSCH;
physical uplink control channel PUCCH transmission; and
sounding reference signal SRS transmission.

13. The apparatus according to any one of claims 10 to 12, wherein the downlink reception comprises at least one of the following:
reception of a target synchronization signal/physical broadcast channel signal block SSB; and
reception of a target control resource set.

14. The apparatus according to claim 13, wherein the target SSB is an SSB indicated by an SSB position.

15. The apparatus according to claim 14, wherein the SSB position comprises an SSB position of a system message SIB1 or an SSB position in *ServingCellConfigCommon* signaling.

16. apparatus according to claim 13, wherein the target control resource set is a control resource set for PDCCH common search space of type 0 and configured by physical downlink control channel configuration PDCCH-ConfigSIB 1 in a main information block.

17. The apparatus according to any one of claims 10 to 16, wherein the apparatus further comprises:
a second determining module, configured to perform the first operation before the processing module determines the first operation based on a type of the uplink transmission.

18. The apparatus according to claim 17, wherein the type of the uplink transmission comprises at least one of the following:
semi-static uplink transmission granted or configured through high layer signaling;
uplink transmission scheduled by downlink control information DCI;
PUSCH transmission of a message MsgA; and
PUSCH transmission of a message 3.

19. A terminal, comprising a processor and a memory, wherein the memory stores a program or instructions executable on the processor, and when the program or the instructions are executed by the processor, steps of the resource conflict processing method according to any one of claims 1 to 9 are implemented.

20. A readable storage medium, wherein the readable storage medium stores a program or instructions, and when the program or the instructions are executed by a processor, the steps of the resource conflict processing method according to any one of claims 1 to 9 are implemented.

21. A chip, comprising a processor and a communication interface, wherein the communication interface is coupled to the processor, and the processor is configured to run a program or instructions, to implement the steps of the resource conflict processing method according to any one of claims 1 to 9.

22. A computer program/program product, wherein the computer program/program product is stored in a non-volatile readable storage medium, and the computer program/program product is executed by at least one processor to implement the steps of the resource conflict processing method according to any one of claims 1 to 9.

23. A communication device, configured to perform the steps of the resource conflict processing method according to any one of claims 1 to 9.
